# EUROPÄISCHE PATENTANMELDUNG

(11) **EP 0 971 138 A2**
(43) Veröffentlichungstag der Anmeldung: **12.01.2000**
(21) Anmeldenummer: 99113025.3
(22) Anmeldetag: 06.07.1999
(51) Int. Cl.: F16C 11/06

(54) **Kugelgelenk und Verfahren zu dessen Herstellung**

(30) Priorität: 09.07.1998 DE 19830593
(71) Anmelder: Sachsenring Entwicklungsgesellschaft mbH, 08058 Zwickau (DE)
(72) Erfinder: Strauch, Jürgen, Dipl.-Ing., 08115 Lichtentanne (DE); Trepte, Jens, Dr.-Ing., 09129 Chemnitz (DE); Wackes, Ullrich, Ing., 08115 Lichtentanne (DE)
(74) Vertreter: Rumrich, Gabriele

(57) **Zusammenfassung**

Die Erfindung betrifft ein Kugelgelenk, welches ein Gehäuse (1) mit einem Hohlraum (1.1) und einer Öfffnung zur Aufnahme einer in einer Lageschale (2) beweglich gelagerten Kugel (3) eines Kugelzapfens (4) aufweist, wobei der Zwischenraum zwischen der Außenwandung der Lageschale (2) und der Wandung das Hohlraums (1.1) des Gehäuses (1) mit einem injizierfähigen Material (5), vorzugsweise mit Kunststoff, gefüllt ist. Es weist mindestens eine durch die Wandung des Gehäuses (1) zu dessen Hohlraum (1.1) führende Zuführöffnung (1.3) für die Injektion des Materials (5) und eine in Richtung zum Kugelzapfen (4) angeordnete Aufnahme (5.1) für einen Dichtungsbalg (6) auf. Erfindungsgemäß reicht das injizierfähige Material (5) über die in Richtung zum Kugelzapfen (4) weisende Öffnung (1.2) des Gehäuses (1) hinaus und bildet den Anschlußbereich (5.1) für die Aufnahme des Dichtungsbalges (6). Dafür vorgesehene Durchtrittsöffnungen (1.5) verankern das injizierte Material mit dem Gehäuse (1). Durch die neuartige Ausbildung des Anschlußbereiches (5.1) wird eine hermetische Abdichtung gegen Schmierstoffaustritt nach Montage des Dichtungsbalges gewährleistet.

## Beschreibung

Die Erfindung betrifft ein Kugelgelenk und ein Verfahren zu dessen Herstellung.

Nach DE 296 17 276 U1 ist ein Kugelgelenk bekannt, welches ein mit einem Hohlraum versehenes Gehäuse aufweist, in dem eine Kugel in einer Lageschale beweglich gelagert ist. Der Raum zwischen der Wandung der Lagerschale und der Wandung des Hohlraumes ist mit injiziertem Material gefüllt. An der in Richtung zum Kugelzapfen weisenden Öffnung des Gehäuses ist außen eine radial umlaufende Ringnut angeordnet, in welcher eine Manschette beziehungsweise ein Balg aufgenommen wird, der zur Abdichtung des Kugelgelenkes dient. Die Herstellung dieser Ringnut als Aufnahme für die Manschette erfordert einen erhöhten Aufwand für die Fertigung des Kugelgelenkes.

Weiterhin ist bei derartigen Kugelgelenken nachteilig, daß durch die Schwindung des injizierten Materials (Kunststoffs) oft eine ungenügende Verriegelung zwischen dem injiziertem Material und dem Gehäuse vorhanden ist und unter ungünstigen Bedingungen der zwischen Kugel und Lagerschale vorhandene Schmierstoff aus dem Innenraum des Gelenkes austreten kann.

Aufgabe der Erfindung ist es, ein Kugelgelenk zu entwickeln, welches eine zuverlässige Verriegelung zwischen Gehäuse und injiziertem Material gewährleistet, den Austritt von Schmierstoff aus dem Innenraum des Gelenks verhindert und gleichzeitig einfacher und kostengünstiger herstellbar ist.

Das Kugelgelenk weist dabei bekannter Weise ein Gehäuse mit einem Hohlraum und mindestens einer Öffnung zur Aufnahme einer in einer Lageschale beweglich gelagerten Kugel eines Kugelzapfens auf. Der Zwischenraum zwischen der Wandung der Lageschale und der Wandung des Hohlraumes des Gehäuses wird mit einem injizierbaren Material, vorzugsweise Kunststoff gefüllt. Das Injizieren des Materials erfolgt über mindestens eine Zuführöffnung. Weiterhin ist am Kugelgelenk eine Aufnahme für einen Dichtungsbalg angeordnet.

Erfindungsgemäß befindet sich diese Aufnahme für den Dichtungsbalg nicht am Gehäuse sondern das injizierfähige Material reicht über die in Richtung zum Kugelzapfen weisende Öffnung des Gehäuses hinaus und hat einen Anschlußbereich für die Aufnahme des Dichtungsbalges.

Dieser aus injiziertem Material bestehende Anschlußbereich kann entweder am Umfang (radial in seiner Mantelfläche oder an der Stirnfläche) ein Element zur Aufnahme des Dichtungsbalges aufweisen, welches z.B. in Form einer Nut oder Hohlkehle ausgebildet sein kann. Zur Herstellung des Anschlußbereiches aus dem injizierfähigen Material ist in dem in Richtung zum Kugelzapfen weisenden Randbereich des Gehäuses mindestens eine symmetrisch oder assymetrisch angeordnete Durchtrittsöffnung für den Durchtritt des injizierfähigen Materials vorgesehen, die sich vorzugsweise an die in Richtung zum Kugelzapfen weisende Öffnung des Gehäuses anschließt. Vorteilhaft ist es, wenn mehrere Durchtrittsöffnungen symmetrisch oder asymmetrisch eingebracht sind, da in diesem Fall ein gleichmäßiges Ausfüllen mit dem injizierfähigen Material gewährleistet wird. Die Durchtrittsöffnungen sind vorzugsweise halbkreisförmig und können bedarfsweise auch in anderen Formen ausgebildet sein. Es ist weiterhin möglich, daß eine oder mehrere Durchtrittsöffnungen gleichzeitig die Zuführöffnungen für das injizierfähige Material bilden.

Um das injizierfähige Material, das zum Ausfüllen des Zwischenraumes zwischen der Wandung der Lageschale und der Wandung des Hohlraumes des Gehäuses dient, auch gleichzeitig als Anschlußbereich für den Dichtungsbalg auszubilden, ist es erforderlich, das Werkzeug zum Injizieren des injizierfähigen Materials entsprechend zu gestalten. Bekannterweise besteht das Werkzeug im Wesentlichen aus zwei Werkzeugteilen, einem ersten Werkzeugteil, welches am Gelenk aus Richtung des Kugelzapfens angreift und bedarfsweise einem zweiten Werkzeugteil, welches dem ersten Werkzeugteil gegenüberliegend am Gelenk angreift, wobei beide Werkzeugteile zum Beschicken der zu verbindenden Elemente und zur Entnahme des Gelenks relativ zueinander bewegbar sind und beim Injizieren des injizierfähigen Materials am Gehäuse abdichten. Das erste Werkzeugteil weist dabei die Kontur des Anschlußbereiches für den Dichtungsbalg auf.

Verfahrensgemäß erfolgt erstmalig mit dem Injizieren des injizierfähigen Materials gleichzeitig das Ausformen der aus injizierfähigem Material bestehenden Aufnahme für den Dichtungsbalg. Das injizierfähige Material kann dabei entweder durch das zweite Werkzeugteil über eine in diesem Bereich des Gehäuses befindliche Zuführöffnung oder durch eine Bohrung des ersten Werkzeugteils über wenigstens eine als Zuführöffnung wirkende Durchströmöffnung injiziert werden.

Mit der Erfindung wird eine einfache elegante Möglichkeit der Herstellung des Anschlußbereiches für den Dichtungsbalg geschaffen, wobei die Durchtrittsöffnungen für das injizierfähige Material gleichzeitig als Verriegelungen zwischen Gehäuse und injizierfähigem Material gegen Verdrehung dienen. Als injizierfähiges Material wird dabei vorzugsweise Kunststoff, der auch mit einem Füllstoff (z.B. Glasfasern, Glaskugeln, Teilchen oder Fasern aus nachwachsenden Rohstoffen usw.) versetz sein kann, oder Elastomer eingesetzt.

Die Erfindung wird nachfolgend anhand von Ausführungsbeispielen und zugehörigen Zeichnungen näher erläutert. Es zeigen:
- Fig. 1:: Gehäuse des Kugelgelenks
- Fig. 2:: Querschnitt eines Kugelgelenks
- Fig. 3:: Schnitt A-A gem. Fig. 2 durch ein Kugelgelenk mit am injiziertem Material befestigtem Dichtungsbalg
- Fig. 4:: Ausschnitt B der Befestigung des Dichtungsbalges gem. Fig. 3
- Fig. 5:: Variante der Befestigung des Dichtungsbalges
- Fig. 6:: Werkzeug mit eingelegtem Kugelgelenk nach dem Injizieren des injizierfähigen Materials mit Zuführung des injizierfähigen Materials durch das zweite Werkzeugteil
- Fig. 7:: Werkzeug mit eingelegtem Kugelgelenk nach dem Injizieren des injizierfähigen Materials mit Zuführung des injizierfähigen Materials durch das erste Werkzeugteil

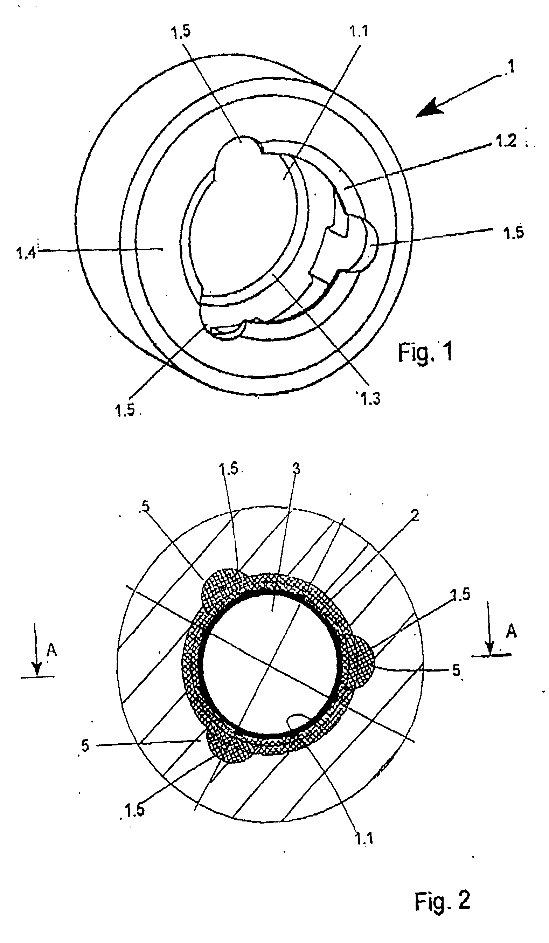

In Fig. 1 wird das Gehäuse 1 des Kugelgelenks als Einzelteil dargestellt. Es weist einen Hohlraum 1.1 mit zwei sich gegenüberliegenden Öffnungen 1.2 und 1.3 auf. Der Randbereich 1.4 des Gehäuses 1, in welchem sich die Öffnung 1.2 befindet, ist hier mit drei Durchtrittsöffnungen 1.5 versehen. Diese schließen sich unmittelbar an die Öffnung 1.2 an und sind halbkreisförmig ausgebildet. Das Gehäuse 1 kann beispielsweise als Metallgußteil, Blechformteil, Kaltfließpreßteil oder Schmiedeteil ausgebildet sein.

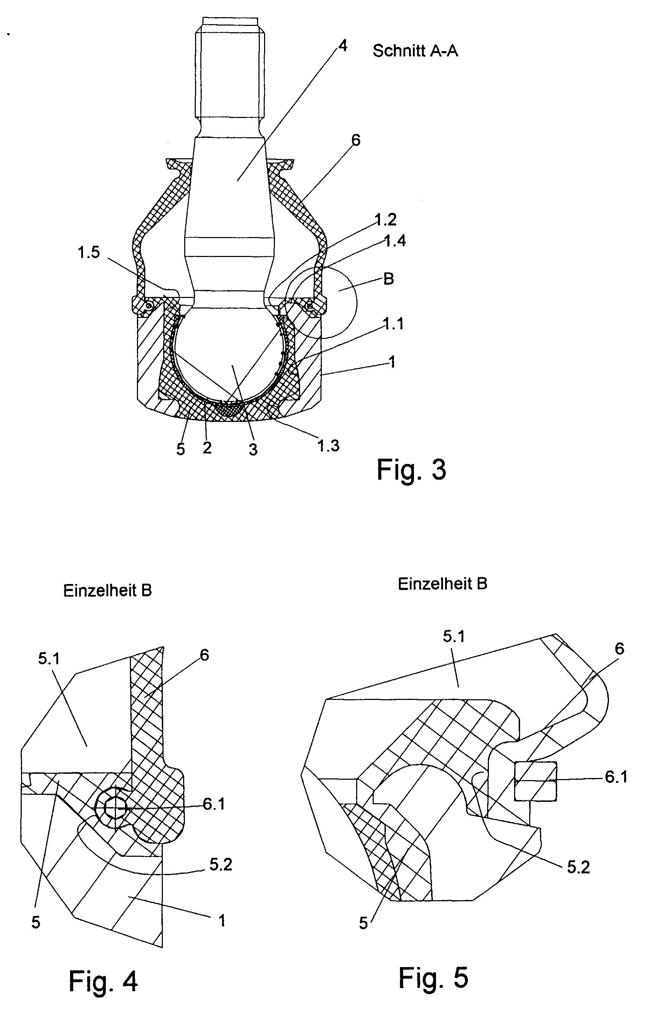

Den Querschnitt eines Kugelgelenkes durch das Gehäuse 1 mit injiziertem Material 5 zeigt Fig. 2. In dem Gehäuse 1 ist die Lagerschale 2 mit der Kugel 3 eines Kugelzapfens 4 (hier nicht dargestellt) angeordnet. In den Durchtrittsöffnungen 1.5 befindet sich das injizierte Material 5. Der Schnitt A-A durch das Kugelgelenk wird in Fig. 3 gezeigt. In den Hohlraum 1.1 des Gehäuses 1 wurde durch die Öffnung 1.3 die in der Lageschale 2 beweglich gelagert Kugel 3 des Kugelzapfens 4 eingebracht. Das Gehäuse 1 wird durch Umformen im Bereich A verschlossen.

Der Zwischenraum zwischen der unbearbeiteten Wandung des Hohlraums 1.1 des Gehäuses 1 und der Lagerschale 2 ist mit injizierfähigem Material 5 ausgefüllt. Das injizierfähige Material 5 reicht durch die Durchbrüche 1.3 des Gehäuses 1 über dessen oberen Rand 1.4 und bildet den Anschlußbereich 5.1 für den Dichtungsbalg 6. Die Einzelheit B gem. Fig. 3 für die Befestigung des Dichtungsbalges 6 am Anschlußbereich 5.1 des injizierten Materials 5 ist in Fig. 4 dargestellt. Durch die Verwendung des injizierten Materials werden dabei unbearbeitete rauhe Oberflächen des Hohlraums 1.1 und des Randbereiches 1.4 des Gehäuses 1 ausgeglichen.

Der Anschlußbereich 5.1 des injizierten Materials 5 weist dabei eine am Umfang radial umlaufende Nut 5.2 auf, in welcher der Dichtungsbalg 6 über einen Verstärkungsring 6.1 durch Einknöpfen (Einschnappen, Einklippen) befestigt werden kann. Gemäß Fig. 5 kann der Dichtungsbalg 6 auch mittels eines an dessen Außenumfang angebrachten Verstärkungsringes 6.1 in einer dafür vorgesehenen Nut 5.2 am Außenumfang des Anschlußbereiches 5.1 angeordnet sein.

Das Werkzeug 7 zur Herstellung eines Kugelgelenkes besteht im Wesentlichen aus einem ersten Werkzeugteil 7.1, welches aus Richtung des Kugelzapfens 4 am Gehäuse 1 angreift und einem zweiten Werkzeugteil 7.2, welches dem ersten Werkzeugteil gegenüberliegend angeordnet ist. Im ersten Werkzeugteil 7.1 ist die Kontur 7.3 für den Anschlußbereich des Dichtungsringes ausgespart. Das zweite Werkzeugteil 7.2 weist eine Bohrung 7.4 zum Zuleiten des injizierfähigen Materials 5 auf. Während des Injizierens des Materials 5 liegt das zweite Werkzeugteil 7.2 am Gehäuse 1 dicht an und umschließt dieses teilweise. Das erste Werkzeugteil 7.1 greift aus Richtung des Kugelzapfens 4 am Rand der Lagerschale 2 ebenfalls dichtend an. Zum Einformen der radialen Nut 5.2 am Umfang sind Querschieber 8 vorgesehen, die einerseits am Gehäuserand 1.4 und andererseits am ersten Werkzeugteil 7.1 dichtend anliegen. Durch die Bohrung 7.4 des zweiten Werkzeugteils 7.2 wird das injizierfähige Material 5 über die Öffnung 1.3 des Gehäuses 1 in den Raum zwischen Hohlraum 1.1 und Gleitschale 2 und über die Durchbrüche 1.5 in die Kontur 7.3 des ersten Werkzeugteiles 7.1 injiziert, so daß gleichzeitig mit dem Ausfüllen des Hohlraumes 1.1 des Gehäuses 1 der Anschlußbereich 5.1 für den Dichtungsbalg 6 hergestellt wurde. Dabei umschließt das injizierte Material 5 allseitig und flanschartig die Öffnung 1.2 und somit den in Richtung zum Kugelzapfen 4 weisenden Randbereich 1.4 des Gehäuses 1.

Durch das Ausfüllen des Hohlraumes 1.1 und somit das Umschließen der Lagerschale 2 mit dem injizierten Material 5 wird ein sicherer Halt der Lagerschale 2 und somit der Kugel 5 gewährleistet.

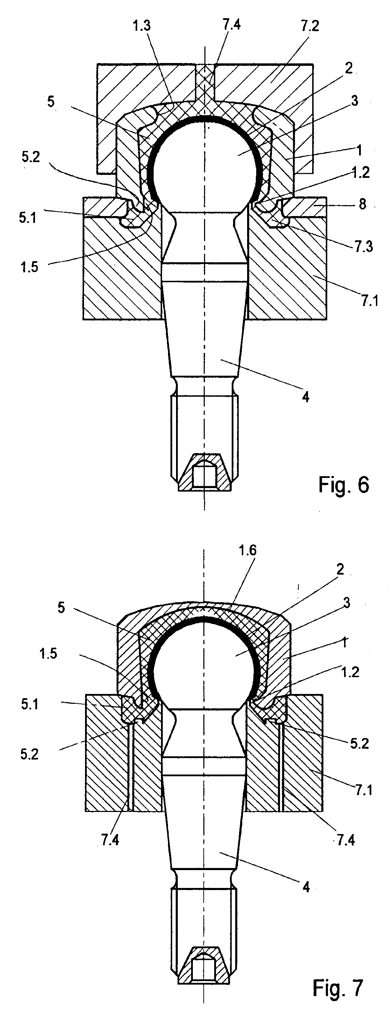

Eine weitere Ausführungsvariante ist in Fig. 7 dargestellt.

Das Gehäuse 1 weist einen Hohlraum 1.1 und nur eine Öffnung 1.2 zum Einlegen des Kugelzapfens 3 und der Lagerschale 2 auf. Es wird somit ein Bodenbereich 1.6 gebildet. An das Gehäuse 1 greift nur aus Richtung des Kugelzapfens 4 ein erstes Werkzeugteil 7.1 mit der Kontur 7.2 zur Ausbildung des Anschlußbereiches 5.1 für den Dichtungsbalg an, welches im dargestellten Fall zwei Bohrungen 7.4 für das gleichmäßige Zuführen des zu injizierenden Materials 5 aufweist. Der Anschlußbereich 5.1 ist in seiner in Richtung zum Kugelzapfen 4 weisenden Stirnfläche mit einer Nut 5.2 für die spätere Aufnahme des Dichtungsbalges versehen.

Dadurch können die Querschieber entfallen. Das zu injizierende Material 5 wird über die Bohrungen 7.4 des ersten Werkzeugteils 7.1 zugeführt, füllt dessen Kontur 7.2 aus und dringt über die Durchbrüche 1.5 in den Zwischenraum zwischen Aussparung 1.1 und Gleitschale 2 in das Gehäuse 1.

Durch das Umschließen der Lagerschale mit dem injizierten Material wird ebenfalls ein sicherer Halt der Lagerschale und der Kugel gewährleistet. Es besteht jedoch zur Aufnahme größerer Axialkräfte auch die Möglichkeit, nach dem Einlegen der Lagerschale und der Kugel in das Gelenk den in Richtung zum Kugelzapfen weisenden Randbereich 1.4 so umzuformen, daß sich die Öffnung 1.2 zumindest bereichsweise verringert, wodurch Axialkräfte zuverlässig aufgenommen werden.

Es ist auch möglich, neben den beschriebenen Ausführungsbeispielen andere Formen und Anordnungen für die Elemente zur Aufnahme des Dichtungsbalges in dessen Anschlußbereich vorzusehen. Dabei kann der Anschlußbereich auch nur zylindrisch ausgebildet sein.

Die Durchbrüche 1.5 können gleiche oder unterschiedliche Formen aufweisen und auf gleichen oder unterschiedlichen Teilkreisen angeordnet sein.

Durch die neuartige Gestaltung des Anschlußbereiches 5 für den Dichtungsbalg und das erfindungsgemäße Verfahren entfällt die bisher notwendige mechanische Bearbeitung des Gehäuses zur Herstellung der Nut für die Aufnahme des Dichtungsbalges.

Weiterhin kann vorteilhafter Weise die Höhe des Gehäuses 1 um die Höhe der neuartigen Aufnahme 5 verringert werden.

Große Toleranzen und unbearbeitete rauhe Oberflächen des in Richtung zum Kugelzapfen 4 weisenden Randes 1.5 des Gehäuses 1 werden ebenfalls ausgeglichen.

Durch die gleichzeitige Ausbildung des Anschlußbereiches 5.1 für den Dichtungsbalg 6 mit dem injizierten Material 5 ist nach der Montage des Dichtungsbalges 6 ein im Innenraum hermetisch abgedichtetes Gelenk erstellt.

Die hermetische Abdichtung kann durch eine die Haftung des injizierfähigen Materials verbessernde Oberflächenstruktur des Gehäuses 1 im Bereich seiner Öffnung 1.2 und/oder in dessen Randbereich 1.4, der vom injizierten Material 5 umschlossen wird, verbessert werden. In diese Bereiche 1.2, 1.4 können dazu beispielsweise umlaufende Rillen oder Riefen eingebracht sein, in welche sich das injizierte Material 5 einformt und somit abdichtet oder es kann eine entsprechend Rauhe Oberfläche vorliegen, welche die Haftung und Abdichtung zum injizierten Material gewährleistet.

Wie bereits vorgenannt beschrieben, wird als injizierfähiges Material vorzugsweise Kunststoff verwendet, der auch mit einem Füllstoff (z.B. Glasfasern, Glaskugeln, Fasern oder Partikel nachwachsender Rohstoffe usw.) versetzt sein kann. Es besteht auch die Möglichkeit, Elastomere oder mineralische Füllstoffe beispielsweise auf der Basis von Glas oder anderen mineralischen Verbindungen als injizierfähiges Material zu verwenden.

Gemäß einer weiteren vorteilhaften nicht dargestellten Ausführungsvariante kann der Dichtungsbalg auch mit dem Injizieren des Materials 5 an den Aufnahmebereich fest und dicht angeformt werden.

## Patentansprüche

1. Kugelgelenk, welches ein Gehäuse (1) mit einem Hohlraum (1.1) und mindestens eine Öffnung zur Aufnahme einer in einer Lageschale (2) beweglich gelagert Kugel (3) eines Kugelzapfens (4) aufweist, mit einer Öffnung (1.2) in dem in Richtung zum Kugelzapfen (4) weisenden Randbereich (1.4) des Gehäuses, durch welche der Kugelzapfen (4) ragt und mit einem Zwischenraum zwischen der Wandung des Hohlraums (1.1) des Gehäuses (1) und der Außenwandung der Lageschale (2), der mit einem injizierfähigen Material (5) gefüllt ist, sowie mit mindestens einer durch die Wandung des Gehäuses (1) zu dessen Hohlraum (1.1) führenden Zuführöffnung für die Injektion des injizierfähigen Materials (5) und einer in Richtung zum Kugelzapfen (4) angeordneten Aufnahme für einen Dichtungsbalg (6), dadurch gekennzeichnet, daß das injizierfähige Material (5) über die in Richtung zum Kugelzapfen (4) weisende Öffnung (1.2) des Gehäuses (1) hinausreicht, und einen Anschlußbereich (5.1) für die Aufnahme des Dichtungsbalges (6) bildet.

2. Kugelgelenk nach Anspruch 1, dadurch gekennzeichnet, daß sich das injizierte Material (5) an den in Richtung zum Kugelzapfen weisenden Randbereich (1.4) des Gehäuses (1) zur Bildung des Anschlußbereiches 5.1 flanschartig anschließt.

3. Kugelgelenk nach Anspruch 1 oder 2, dadurch gekennzeichnet, daß der Anschlußbereich (5.1) am Umfang oder an der Stirnfläche ein Element (5.2) zur Befestigung des Dichtungsbalges (6) aufweist.

4. Kugelgelenk nach einem der Ansprüche von 1 bis 3, dadurch gekennzeichnet, daß das Element (5.2) zur Befestigung des Dichtungsbalges (6) durch die zylindrisch ausgebildete Mantelfläche des Anschlußbereiches (5.1) oder in Form einer in den Anschlußbereich (5.1) eingebrachten Nut oder Hohlkehle ausgebildet ist.

5. Kugelgelenk nach einem der Ansprüche von 1 bis 4, dadurch gekennzeichnet, daß das Gehäuse (1) in seinem in Richtung zum Kugelzapfen (4) weisenden Randbereich (1.4) mindestens eine gleichzeitig als Verdrehsicherung zwischen Gehäuse (1) und injiziertem Material dienende Durchtrittsöffnung (1.5) für den Durchtritt des injizierfähigen Materials (5) zur Bildung des Anschlußbereiches (5.1) aufweist.

6. Kugelgelenk nach Anspruch 5, dadurch gekennzeichnet, daß sich die Durchtrittsöffnung (1.5) an die Öffnung (1.2) des Gehäuses (1) anschließt.

7. Kugelgelenk nach Anspruch 5 und 6, dadurch gekennzeichnet, daß mehrere Durchtrittsöffnungen (1.5) in dem zum Kugelzapfen (4) weisenden Randbereich (1.4) des Gehäuses (1) angeordnet sind.

8. Kugelgelenk nach einem der Ansprüche von 5 bis 7, dadurch gekennzeichnet, daß die Durchtrittsöffnungen (1.5) halbkreisförmig ausgebildet sind oder andere Formen aufweisen.

9. Kugelgelenk nach einem der Ansprüche von 5 bis 8, dadurch gekennzeichnet, daß wenigstens eine Durchtrittsöffnung (1.5) die Zuführöffnung für das injizierfähige Material (5) bildet.

10. Kugelgelenk nach einem der Ansprüche von 1 bis 9, dadurch gekennzeichnet, daß als injizierfähiges Material (5) ein Kunststoff, ein mineralischer Stoff, mineralische Verbindungen oder Kombinationen dieser Materialien Anwendung finden.

11. Kugelgelenk nach Anspruch 11, dadurch gekennzeichnet, daß das injizierfähige Material (5) mit Füllstoff in Form von Glasfasern, Glaskugeln, Fasern oder Partikel nachwachsender Rohstoffe versehen ist.

12. Kugelgelenk nach Anspruch 11, dadurch gekennzeichnet, daß es durch die Ausbildung Aufnahmebereiches (5.1) aus injiziertem Material (5) nach der Montage des Dichtungsbalges hermetische abgedichtet ist.

13. Kugelgelenk nach einem der Ansprüche von 1 bis 12, dadurch gekennzeichnet, daß das Gehäuse (1) um den aus injiziertem Material gebildeten Anschlußbereich verkürzt ist.

14. Verfahren zur Herstellung eines Kugelgelenkes durch injizieren eines injizierfähigen Materials (5) in den Zwischenraum zwischen einer Wandung einer Lageschale (2), in welcher sich eine Kugel (3) eines Kugelzapfens (4) befindet und einer Wandung eines Hohlraumes (1.1) eines Gehäuses (1), wobei die Lagerschale (2) mit der Kugel (3) des Kugelzapfens (4) in dem Hohlraum (1.1) positioniert wird und das Gehäuse (1) mindestens eine in Richtung zum Kugelzapfen (4) weisende Öffnung (1.2) aufweist unter Anwendung eines ersten Werkzeugteils (7.1), welches am Gelenk aus Richtung des Kugelzapfens (4) angreift und bedarfsweise mit einem zweiten Werkzeugteil (7.2), welches dem ersten Werkzeugteil gegenüberliegend angeodnet ist und am Gelenk angreift, wobei beide Werkzeugteile (7.1, 7.2) zum Beschicken der zu verbindenden Elemente und zur Entnahme des Gelenks relativ zueinander bewegbar sind und beim injizieren am Gehäuse (1) abdichten, insbesondere nach einem der Ansprüche von 1 bis 13, dadurch gekennzeichnet, daß gleichzeitig mit dem Injizieren des injizierfähigen Materials (5) zum Ausfüllen des Zwischenraums zwischen der Außenwandung der Lageschale (2) und der Wandung des Hohlraums (1.1) des Gehäuses (1) an dem in Richtung zum Kugelzapfen (4) weisenden Bereich des Gehäuses (1) ein aus dem injizierfähigen Material (5) bestehender Anschlußbereich (5.1) für die Aufnahme eines Dichtungsbalges (6) erzeugt wird.

15. Verfahren nach Anspruch 10, dadurch gekennzeichnet, daß das injizierfähige Material (5) in eine, die Kontur des Anschlußbereiches (5.1) für den Dichtungsbalg (6) enthaltende, Aussparung des ersten Werkzeugteils (7.1) injiziert wird.

16. Verfahren nach Anspruch 10 und 11, dadurch gekennzeichnet, daß das injizierfähige Material (5) durch das zweite Werkzeugteil (7.2) über mindestens eine zum Hohlraum (1.1) reichende Zuführöffnung (1.3) des Gehäuses (1) in den Hohlraum (1.1) des Gehäuses (1) und über mindestens eine, im in dem zum Kugelzapfen weisenden Randbereich (1.4) des Gehäuses (1) angeordnete Durchtrittsöffnung (1.5) in die Aussparung (7.3) des ersten Werkzeugteils (7.1) injiziert wird.

17. Verfahren nach Anspruch 10 und 11, dadurch gekennzeichnet, daß das injizierfähige Material (5) über mindestens eine Bohrung (7.4) des ersten Werkzeugteils (7.1) in dessen Aussparung (7.3) und über mindestens eine, im in dem zum Kugelzapfen weisenden Randbereich (1.4) des Gehäuses (1) angeordnete, und zum Hohlraum (1.1) reichende Durchtrittsöffnung (1.5) in das Gehäuse (1) injiziert wird.
